# EUROPÄISCHE PATENTANMELDUNG

(11) **EP 0 795 981 A2**
(43) Veröffentlichungstag der Anmeldung: **17.09.1997**
(21) Anmeldenummer: 97400565.4
(22) Anmeldetag: 14.03.1997
(51) Int. Cl.: H04L 27/12

(54) **Frequenzumtastungsmodulator**

(30) Priorität: 14.03.1996 DE 19609907
(71) Anmelder: ALCATEL ALSTHOM COMPAGNIE GENERALE D'ELECTRICITE, 75008 Paris (FR)
(72) Erfinder: Weiss, Ulrich, 70839 Gerlingen (DE)
(74) Vertreter: Schätzle, Albin, Dipl.-Phys.

(57) **Zusammenfassung**

Ein Modulator (MOD), mittels dessen ein digitales Nachrichtensignal (N) nach dem Verfahren der digitalen Frequenzumtastung für hohe Umtastfrequenzen moduliert werden kann, ist durch einen Oszillator (OSC), einen umsschaltbaren Teiler (DIV1), zwei festen Teilern (DIV2, DIV3), einen digitalen Multiplexer (MUL) und einen Filter (FIL) realisiert. Das digitale Taktsignal des Oszillators (OSC) wird dem umschaltbaren Teiler (DIV1) zugeführt, dessen Teilerverhältnis in Abhängigkeit vom digitalen Nachrichtensignal (N) umschaltbar ist. Zum Multiplexer (MUL) wird das in einen festen Teiler (DIV3) geteilte Ausgangssignal des umschaltbaren Teilers (DIV1) mit dem im anderen festen Teiler (DIV2) geteilten digitalen Taktsignal multipliziert. Es entsteht ein digitales Signal mit vier Umtastfrequenzen, von denen im Filter (FIL) zwei herausgefiltert und übertragen werden.

## Beschreibung

Die Erfindung betrifft einen Modulator zur Modulation eines digitalen Nachrichtensignals nach dem Verfahren der digitalen Frequenzumtastung nach dem Oberbegriff des Patentanspruchs 1.

Aus dem "Taschenbuch der Hochfrequenztechnik", 1986, ISBN 3-540-15393-4, ist auf den Seiten 017 bis 018 ein Modulator zur Modulation eines binären Nachrichtensignals nach dem Verfahren der digitalen Frequenzumtastung beschrieben. Der Modulator beinhaltet einen Oszillator und einen umschaltbaren Teiler. Das Taktsignal des Oszillators wird dem umschaltbaren Teiler zugeführt, dessen Teilerverhältnis in Abhängigkeit vom binären Nachrichtensignal umgeschaltet wird. Die Teilerverhältnisse bestimmen die Umtastfrequenzen. Für hohe Umtastfrequenzen mit geringem Frequenzabstand, z.B. 4,45/4,55 MHz, sind ein umschaltbarer Teiler, dessen Teilerverhältnis von 500 auf 511 umschaltbar ist und ein Oszillator mit einer Taktfrequenz von mindestens 4,55 GHz erforderlich.

Es ist deshalb die Aufgabe der Erfindung, einen Modulator zur Verfügung zu stellen, mittels dessen ein digitales Nachrichtensignal nach dem Verfahren der digitalen Frequenzumtastung für hohe Umtastfrequenzen mit geringem Frequenzabstand technisch weniger aufwendig moduliert werden kann.

Diese Aufgabe wird durch die Lehre des Patentanspruchs 1 gelöst. Vorteilhafte Ausgestaltungen sind den abhängigen Patentansprüchen 2 bis 6 zu entnehmen.

Ein besonderer Vorteil der Erfindung ist, daß mit einem Modulator vier quarzstabile Umtastfrequenzen generiert werden können. Somit können wahlweise zwei der vier oder alle vier Umtastfrequenzen für die Übertragung genutzt werden.

Ein weiterer Vorteil der Erfindung ist, daß das durch das digitale Nachrichtensignal hervorgerufene Umschalten bei Frequenzen erfolgt, die beispielsweise um den Faktor 5 niedriger sind als die Umtastfrequenzen.

Im folgenden wird die Erfindung eines Ausführungsbeispiels unter Zuhilfenahme zweier Figuren erläutert. Es zeigen:
- Fig. 1: eine schematische Darstellung eines erfindungsgemäßen Modulators, und
- Fig. 2: einen schematisch dargestellten Aufbau eines umschaltbaren Filters des erfindungsgemäßen Modulators aus Fig. 1.

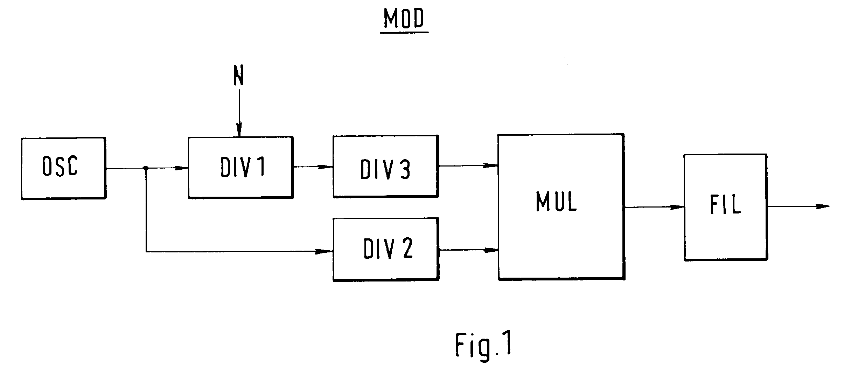

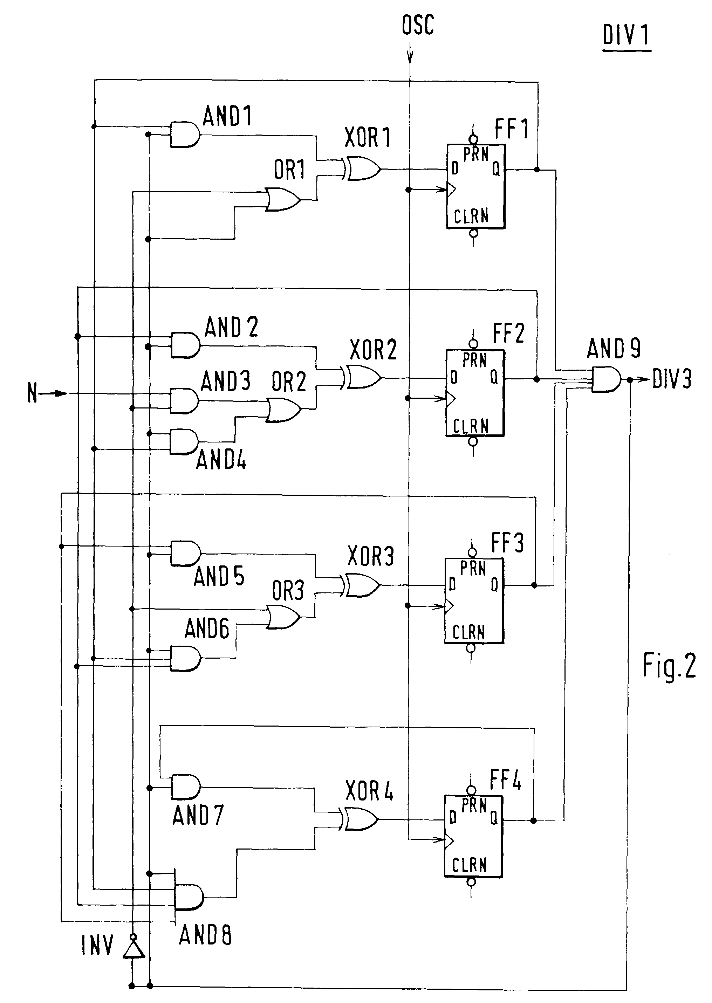

Das Ausführungsbeispiel wird nun zunächst anhand von Fig. 1 und anschließend anhand von Fig. 2 beschrieben. Fig. 1 zeigt einen erfindungsgemäßen Modulator MOD zur Modulation eines digitalen Nachrichtensignals N nach dem Verfahren der digitalen Frequenzumtastung. Ein solcher Modulator MOD wird beispielsweise in einem optischen Breitbandnetzabschluß in einem hybriden Kommunikationssystem zur Verteilung von Video- und Audiosignalen und zur Übertragung von Abrufsignalen von den Set-Top-Boxen mehrerer Endstellen zu einem Video-Server verwendet. Die digitalen Nachrichtensignale sind beispielsweise Überwachungssignale, die angeben, ob der optisch/elektrische Umsetzer und der Verstärker im optischen Breitbandnetzabschluß fehlerfrei oder fehlerbehaftet arbeitet. Die digitalen Nachrichtensignale haben beispielsweise eine Datenrate von 160 kbit/s.

Für die Übertragung der Video- und Audiosignale ist ein Frequenzbereich von 50 MHz bis 800 MHz vorgesehen. Für die Übertragung der Abrufsignale ist ein Frquenzbereich von 8 MHz bis 30 MHz vorgesehen.

Die Umtastfrequenzen der modulierten digitalen Nachrichtensignale sollten mindestens um den Faktor 5 höher liegen als die durch die Datenrate der digitalen Nachrichtensignale vorgegebene Frequenz. Andererseits sollten die Umtastfrequenzen außerhalb der vorgesehenen Frequenzbereiche für die Video-, Audio- und Abrufsignale liegen, um deren Übertragung nicht zu beeinträchtigen. Die Umtastfrequenzen werden beispielsweise zu 4,45 MHz und 4,55 MHz gewählt.

Der Modulator MOD beinhaltet einen Oszillator OSC, einen umschaltbaren Teiler DIV1, zwei feste Teiler DIV2, DIV3, einen digitalen Multiplizierer MUL und ein Filter FIL.

Der Oszillator OSC ist ein Quarzoszillator, der ein digitales Taktsignal mit der Taktfrequenz 10 MHz generiert. Das digitale Taktsignal wird dem umschaltbaren Teiler DIV1 und dem festen Teiler DIV2 zugeführt.

Der umschaltbare Teiler DIV1 hat ein Teilerverhältnis, das in Abhängigkeit vom digitalen Nachrichtensignal umschaltbar ist. Das digitale Nachrichtensignal ist beispielsweise eine binäre Bitfolge. Bei jeder logischen Eins generiert der umschaltbare Teiler DIV1 ein digitales Signal, dessen Frequenz der Taktfrequenz des digitalen Taktsignals geteilt durch 9 entspricht, also ca. 1,111 MHz beträgt. Bei jeder logischen Null generiert der umschaltbare Teiler DIV1 ein digitales Signal, dessen Frequenz der Taktfrequenz des digitalen Taktsignals geteilt durch 11 entspricht, also ca. 909 kHz beträgt. Eine Ausführungsform des umschaltbaren Teilers DIV1 ist zu Fig. 2 beschrieben. Das Ausgangssignal des umschaltbaren Teilers DIV1 wird dem festen Teiler DIV3 zugeführt.

Der feste Teiler DIV3 hat ein Teilerverhältnis von 2. Im festen Teiler DIV3 werden die Frequenzen des Ausgangssignals des umschaltbaren Teilers DIV1 somit durch 2 geteilt. Die Frequenzen des Ausgangssignals des festen Teilers DIV3 betragen demnach ca. 555 kHz und 454 kHz. Der feste Teiler DIV3 dient dazu, die im umschaltbaren Teiler DIV1 durch das Umschalten hervorgerufenen Störungen zu kompensieren. Eine Ausführungsform für den festen Teiler DIV3 ist beispielsweise ein mit dem Ausgangssignal des umschaltbaren Teilers DIV1 getaktetes D-Flipflop. Das Ausgangssignal des festen Teilers DIV3 wird dem digitalen Multiplizierer MUL zugeführt.

Der feste Teiler DIV2 hat ein Teilerverhältnis von 2. Im festen Teiler DIV2 wird die Taktfrequenz des digitalen Taktsignals von 10 MHz in 5 MHz umgesetzt und anschließend dem digitalen Multiplizierer zugeführt. Eine Ausführungsform für den festen Teiler DIV3 ist beispielsweise ein D-Flipflop, das mit dem digitalen Taktsignal getaktet wird.

Der digitale Multiplizierer MUL ist als EXOR-Gatter ausgeführt und dient zur Multiplikation des Ausgangssignals des umschaltbaren Teilers DIV1 mit dem durch den Faktor 2 geteilten digitalen Taktsignals. Bei der Multiplikation entsteht ein digitales Signal mit vier Frequenzen: 5 MHz - 555 kHz = 4,45 MHz, 5 MHz + 555 kHz = 5,55 MHz, 5 MHz - 454 kHz = 4,55 MHz und 5 MHz + 454 MHz = 5,45 MHz. Das digitale Nachrichtensignal ist somit in ein digitales Signal mit vier Frequenzen umgesetzt worden. Die Frequenzen 4,45 MHz und 5,55 MHz beinhalten gleichwertig die Information über die logischen Einsen im digitalen Nachrichtensignal. Die Frequenzen 4,55 MHz und 5,45 MHz beinhalten gleichwertig die Information über die logischen Nullen im digitalen Nachrichtensignal. Das digitale Signal mit den vier Frequenzen beinhaltet somit Redundanz. Es können vier Frequenzenpaare gebildet werden, die jede für sich die gesamte Information über das digitale Nachrichtensignal enthalten: 4,45/4,55 MHz, 4,45/5,45 MHz, 5,55/4,55 MHz und 5,55/5,45 MHz. Das digitale Signal mit den vier Frequenzen wird dem Filter FIL zugeführt.

Das Filter FIL ist als Keramikfilter mit Bandpaßcharakteristik ausgeführt. Es dient dazu, aus den vier Frequenzen des Ausgangssignals des digitalen Multiplizierers MUL zwei Frequenzen herauszufiltern. Die herausgefilterten Frequenzen sind die Umtastfrequenzen, die zum Video-Server übertragen werden. Der Durchlaßbereich des Filters FIL beträgt beispielsweise 4,4 MHz bis 4,6 MHz, womit das Frequenzenpaar 4,45/4,55 MHz herausgefiltert wird.

Fig.2 zeigt den umschaltbaren Teiler DIV1 aus Fig. 1. Der umschaltbare Teiler DIV1 beinhaltet neun UND-Gatter AND1 bis AND9, drei ODER-Gatter OR1 bis OR3, vier Exklusiv-ODER-Gatter XOR1 bis XOR4, einen Inverter INV und vier D-Flipflops FF1 bis FF4. Der umschaltbare Teiler DIV1 dient dazu, bei einer logischen Eins im digitalen Nachrichtensignal ein digitales Signal mit der durch den Faktor 9 geteilten Taktfrequenz des digitalen Taktsignals und bei einer logischen Null im digitalen Nachrichtensignal ein digitales Signal mit der durch den Faktor 11 geteilten Taktfrequenz des digitalen Taktsignals zu generieren. Der umschaltbare Teiler DIV1 hat zwei Eingänge und eine Ausgang. Am ersten Eingang liegt das digitale Taktsignal des Oszillators OSC an, das den Takteingängen der D-Flipflops FF1 bis FF4 zugeführt wird. Am zweiten Eingang liegen die digitalen Nachrichtensignale an, die dem ersten Eingang des UND-Gatters AND3, zugeführt werden. Das Ausgangssignal liegt am Ausgang des UND-Gatters AND9 an und wird dem festen Teiler DIV3 zugeführt.

Das UND-Gatter AND1 hat zwei Eingänge und einen Ausgang. Der erste Eingang ist mit dem Ausgang des D-Flipflops FF1, der zweite Eingang mit dem Ausgang des UND-Gatters AND9 und der Ausgang mit dem ersten Eingang des Exklusiv-ODER-Gatters XOR1 verbunden.

Das UND-Gatter AND2 hat zwei Eingänge und einen Ausgang. Der erste Eingang ist mit dem Ausgang des D-Flipflops FF2, der zweite Eingang mit dem Ausgang des UND-Gatters AND9 und der Ausgang mit dem ersten Eingang des Exklusiv-ODER-Gatters XOR2 verbunden.

Das UND-Gatter AND 3 hat zwei Eingänge und einen Ausgang. Der zweite Eingang ist mit dem Ausgang des Inventers INV und der Ausgang mit dem ersten Eingang des ODER-Gatters OR2 verbunden.

Das UND-Gatter AND4 hat zwei Eingänge und einen Ausgang. Der erste Eingang ist mit dem Ausgang des UND-Gatters AND9, der zweite Eingang mit dem Ausgang des D-Flipflops FF1 und der Ausgang mit dem zweiten Eingang des ODER-Gatters OR2 verbunden.

Das UND-Gatter AND5 hat zwei Eingänge und einen Ausgang. Der erste Eingang ist mit dem Ausgang des D-Flipflops FF3, der zweite Eingang mit dem Ausgang des UND-Gatters AND9 und der Ausgang mit dem ersten Eingang des Exklusiv-ODER-Gatters XOR3 verbunden.

Das UND-Gatter AND6 hat drei Eingänge und einen Ausgang. Der erste Eingang ist mit dem Ausgang des UND-Gatters AND9, der zweite Eingang mit dem Ausgang des D-Flipflops FF1, der dritte Eingang mit dem Ausgang des D-Flipflops FF2 und der Ausgang mit dem zweiten Eingang des ODER-Gatters OR3 verbunden.

Das UND-Gatter AND7 hat zwei Eingänge und einen Ausgang. Der erste Eingang ist mit dem Ausgang des D-Flipflops FF4, der zweite Eingang mit dem Ausgang des UND-Gatters AND9 und der Ausgang mit dem ersten Eingang des Exklusiv-ODER-Gatters XOR4 verbunden.

Das UND-Gatter AND8 hat vier Eingänge und einen Ausgang. Der erste Eingang ist mit dem Ausgang des UND-Gatters AND9, der zweite Eingang mit dem Ausgang des D-Flipflops FF1, der dritte Eingang mit dem Ausgang des D-Flipflops FF2, der vierte Eingang mit dem Ausgang des D-Flipflops FF3 und der Ausgang mit dem zweiten Eingang des Exklusiv-ODER-Gatters XOR4 verbunden.

Das UND-Gatter AND9 hat vier Eingänge und einen Ausgang. Der erste Eingang ist mit dem Ausgang des D-Flipflops FF1, der zweite Eingang mit dem Ausgang des D-Flipflops FF2, der dritte Eingang mit dem Ausgang des D-Flipflops FF3 und der vierte Eingang mit dem Ausgang des D-Flipflops FF4 verbunden.

Das ODER-Gatter OR1 hat zwei Eingänge und einen Ausgang. Der erste Eingang ist mit dem Ausgang des Inventers INV, der zweite Eingang mit dem Ausgang des UND-Gatters AND9 und der Ausgang mit dem zweiten Eingang des Exklusiv-ODER-Gatters XOR1 verbunden.

Das ODER-Gatter OR2 hat zwei Eingänge und einen Ausgang. Der Ausgang ist mit dem zweiten Eingang des Exklusiv-ODER-Gatters XOR2 verbunden.

Das ODER-Gatter OR3 hat zwei Eingänge und einen Ausgang. Der erste Eingang ist mit dem Ausgang des Inverters INV und der Ausgang mit dem zweiten Eingang des Exklusiv-ODER-Gatters XOR3 verbunden.

Jedes Exklusiv-ODER-Gatter XOR1, XOR2, XOR3, XOR4 hat zwei Eingänge und einen Ausgang. Der Ausgang des Exklusiv-ODER-Gatters XOR1 ist mit dem Eingang des D-Flipflops FF1 verbunden. Der Ausgang des Exklusiv-ODER-Gatters XOR2 ist mit dem Eingang des D-Flipflops FF2 verbunden. Der Ausgang des Exklusiv-ODER-Gatters XOR3 ist mit dem Eingang des D-Flipflops FF3 verbunden. Der Ausgang des Exklusiv-ODER-Gatters XOR4 ist mit dem Eingang des D-Flipflops FF4 verbunden.

Jedes D-Flipflop FF1, FF2, FF3, FF4 hat einen Eingang, einen Takteingang und einen Ausgang. Jedes D-Flipflop FF1, FF2, FF3, FF4 hat zusätzlich einen Setz- und einen Rücksetzeingang. Zu Beginn der Modulation werden alle D-Flipflops FF1, FF2, FF3, FF4 zurückgesetzt.

Der Inverter INV hat eine Eingang und einen Ausgang. Der Eingang ist mit dem Ausgang des UND-Gatters AND9 verbunden.

Im Ausführungsbeispiel werden die Umtastfrequenzen 4,45 MHz und 4,55 MHz zum Video-Server übertragen. Anstelle dieser beiden Umtastfrequenzen kann auch das digitale Ausgangssignal des digitalen Multiplizierers mit den vier Frequenzen 4,45 MHz, 4,55 MHz, 5,45 MHz und 5,55 MHz zum Video-Server übertragen werden. Dadurch wird eine erhöhte Sicherheit bei der Signalübertragung erreicht. Alternativ können auch über ein zweites Filter die Frequenzen 5,45 MHz und 5,55 MHz herausgefiltert werden und stehen im Fehlerfall als Reserve zur Verfügung, d.h. treten Störungen bei 4,45 MHz und/oder 4,55 MHz auf, so werden die Frequenzen 5,45 MHz und 5,55 MHz übertragen.

Beim Ausführungsbeispiel sind feste Teiler DIV2, DIV3 mit einem Teilerverhältnis von 2 verwendet. Das Teilerverhältnis der festen Teiler DIV2, DIV3 kann auch ein ganzzahliges Vielfaches von 2 sein oder es können Reihenschaltungen von festen Teilern mit Teilerverhältnissen von 2 verwendet werden. Dies würde die Kompensation der Störungen verbessern. Beim Ausführungsbeispiel könnten z.B. ein 20-MHz Oszillator und feste Teiler DIV2, DIV3 mit Teilerverhältnissen von 4 verwendet werden. Andererseits könnten auch ein 5-MHz Oszillator und keine festen Teiler DIV2, DIV3 verwendet werden, wodurch zwei Baugruppen, allerdings auf Kosten der Qualität, eingespart werden könnten.

Im Ausführungsbeispiel ist die Angabe der Zahlenwerte für die Datenrate der digitalen Nachrichtensignale, der Taktfrequenz des Oszillators und der Umtastfrequenzen beispielhaft. Die Erfindung kann auch bei anderen als der obigen Zahlenwerten angewendet werden. Des weiteren ist die Erfindung nicht auf die Verwendung in einem hybriden Kommunikationsnetz beschränkt, sondern kann beispielsweise auch bei der Funkübertragung verwendet werden.

Beim Ausführungsbeispiel sind die digitalen Nachrichtensignale binäre Nachrichtensignale. Anstelle bei binären Nachrichtensignalen, kann die Erfindung auch bei digitalen Nachrichtensignalen mit beispielsweise dreiwertiger Logik, die sog. tri-state logic, angewendet werden. Dazu ist ein umschaltbarer Teiler, der auf drei Teilerverhältnisse umschaltbar und vergleichbar dem umschaltbaren Teiler aus Fig. 2 erweitert um ein Teilerverhältnis aufgebaut ist, erforderlich.

## Patentansprüche

1. Modulator (MOD) zur Modulation eines digitalen Nachrichtensignals (N) nach dem Verfahren der digitalen Frequenzumtastung, mit einem Oszillator (OSC) zur Generierung eines digitalen Taktsignals und einem umschaltbaren Teiler (DIV1), dem das digitale Taktsignal zuführbar und dessen Teilerverhältnis in Abhängigkeit vom logischen Wert des digitalen Nachrichtensignals (N) umschaltbar ist, **dadurch gekennzeichnet,** daß der Modulator (MOD) einen digitalen Multiplizierer (MUL) zur Multiplikation des Ausgangssignals des umschaltbaren Teilers (DIV) mit dem digitalen Taktsignal beinhaltet.

2. Modulator (MOD) nach Anspruch 1, dadurch gekennzeichnet, daß der Modulator (MOD) ein Filter (FIL) mit Bandpaßcharakteristik zur Filterung von zwei der vier Frequenzen des Ausgangssignals des Multiplizierers (MUL) beinhaltet.

3. Modulator (MOD) nach Anspruch 1, dadurch gekennzeichnet, daß der Modulator (MOD) einen festen Teiler (DIV2) beinhaltet, dessen Teilerverhältnis ein ganzzahliges Vielfaches von 2 ist, daß das digitale Taktsignal dem festen Teiler (DIV2) zuführbar ist, und daß das Ausgangssignal des festen Teilers (DIV2) dem Multiplizierer (MUL) zuführbar ist.

4. Modulator (Mod) nach Anspruch 3, dadurch gekennzeichnet, daß der Modulator (MOD) einen weiteren festen Teiler (DIV3) beinhaltet, der zwischen dem umschaltbaren Teiler (DIV1) und dem Multiplizierer (MUL) geschaltet ist und dessen Teilerverhältnis ein ganzzahliges Vielfaches von 2 ist.

5. Modulator (Mod) nach Anspruch 1, dadurch gekennzeichnet, daß die durch den Faktor 10 geteilte Frequenz des Ausgangssignals des festen Frequenzteilers (DIV2) zwischen den Frequenzen des Ausgangssignals des umschaltbaren Teilers (DIV1) liegt.

6. Modulator (MOD) nach Anspruch 1, dadurch gekennzeichnet, daß der digitale Multiplizierer (MUL) ein EXOR-Gatter beinhaltet.
